# EUROPEAN PATENT APPLICATION

(11) **EP 4 478 501 A1**
(43) Date of publication of application: **18.12.2024**
(21) Application number: 22961684.2
(22) Date of filing: 11.10.2022
(51) Int. Cl.: H01M 50/202, H01M 50/249, H01M 50/289

(54) **HOUSING ASSEMBLY, BATTERY CELL, BATTERY, AND ELECTRICAL APPARATUS**

(71) Applicant: Contemporary Amperex Technology Co., Limited, Ningde, Fujian 352100 (CN)
(72) Inventor: SU, Huasheng, Ningde, Fujian 352100 (CN); XING, Chengyou, Ningde, Fujian 352100 (CN); ZHUO, Weirong, Ningde, Fujian 352100 (CN); LI, Quankun, Ningde, Fujian 352100 (CN); XU, Chunguang, Ningde, Fujian 352100 (CN); WANG, Peng, Ningde, Fujian 352100 (CN); JIN, Haizu, Ningde, Fujian 352100 (CN)
(74) Representative: Ran, Handong
(86) International application number: PCT/CN2022/124684
(87) International publication number: WO 2024/077491

(57) **Abstract**

Embodiments of the present application provide a housing assembly, a battery cell, a battery, and an electric apparatus. The housing assembly comprises: a housing member comprising an inner surface and an outer surface which are oppositely provided, and a first through hole running through the inner surface and the outer surface; an insulating member at least partially located on the outer surface of the housing member, and the insulating member comprising a second through hole communicated with the first through hole; electrode terminals mounted in the first through hole and the second through hole so as to be insulated and isolated from the housing member by means of the insulating member; and a flow blocking assembly, the flow blocking assembly being used for blocking a liquid from entering a gap between the housing member and the electrode terminals through a gap between the insulating member and the housing member. According to the housing assembly provided by the technical solution of the present application, the possibility of electronic conduction between the housing member and the electrode terminals due to the presence of a by-product of an electrolyte is effectively reduced, thereby reducing the risk of corrosion and liquid leakage of a housing of a battery cell, and effectively improving the safety performance and quality of the battery cell.

## Description

### Technical Field

The present disclosure relates to the field of battery technology, in particular to a shell assembly, a battery cell, a battery, and an electrical equipment.

### Background Art

Energy conservation and emission reduction are key to the sustainable development of the automotive industry, and electric vehicles have become an important component of the sustainable development of the automotive industry due to their advantages in energy conservation and environmental protection. For electric vehicles, battery technology is an important factor related to their development.

In battery technology, how to improve the safety performance of batteries is an urgent problem to be solved.

### Summary

The present disclosure provides a shell assembly, a battery cell, a battery, and an electrical equipment, in which the shell assembly can effectively improve the safety performance of the battery cell.

In the first aspect, the present disclosure provides a shell assembly, comprising: a shell component, comprising an inner surface and an outer surface arranged oppositely, and a first through-hole penetrating the inner surface and the outer surface; an insulating member, at least partially located on the outer surface of the shell component, wherein the insulating member comprises a second through-hole communicated with the first through-hole; an electrode terminal, installed in the first through-hole and the second through-hole to insulate and isolate from the shell component through the insulating member; and a flow blocking component, wherein the flow blocking component is configured to block liquid from entering the gap between the shell component and the electrode terminal through the gap between the insulating member and the shell component.

The shell assembly provided in the technical solution of the present disclosure is equipped with a flow blocking component for blocking electrolyte from entering, from the gap between the shell component and the insulating member, the gap between the shell component and the electrode terminal. Due to the arrangement of a flow blocking component on the shell assembly, when injecting electrolyte into the battery casing where the shell assembly is applied, the flow blocking component can effectively block the electrolyte from flowing through the gap between the shell component and the insulating member into the gap between the shell component and the electrode terminal, thereby effectively reducing the possibility of electronic conduction between the shell component and the electrode terminal due to the presence of electrolyte by-products, which further reduces the risk of corrosion and leakage of the shell of the battery cell, and effectively improves the safety performance and quality of the battery cell.

According to some embodiments of the present disclosure, the flow blocking component comprises a first protruding part protruding from the outer surface, and the first protruding part is arranged on the outer periphery of the insulating member.

In the above technical solution, the flow blocking component includes a first protruding part protruding from the outer surface of the shell component. The first protruding part protruding from the outer surface of the shell component can effectively block the electrolyte on the outer surface of the shell component from entering the gap between the shell component and the insulating member, thereby reducing the possibility of electrolyte entering the gap between the shell component and the electrode terminal from the source, and effectively improving the safety of the battery cell where the shell assembly is located.

According to some embodiments of the present disclosure, the first protruding part forms a closed annular structure.

In the above technical solution, the first protruding part surrounds the insulating member in a closed circular structure formed by the first protruding part, and the first protruding part surrounds the outer circumference of the insulating member, thereby further reducing the possibility of electrolyte entering the gap between the shell component and the electrode terminal, and further effectively improving the safety of the battery cell where the shell assembly is located.

According to some embodiments of the present disclosure, the flow blocking component further comprises: a first sealing member, wherein the first sealing member is sandwiched between the first protruding part and the insulating member.

In the above technical solution, by setting a first sealing member, the first protruding part and the insulating member are sealed and connected. Even if a small amount of electrolyte overflows the top of the first protruding part and enters the position between the first protruding part and the insulating member, the first sealing member can effectively prevent the electrolyte from entering the gap between the shell component and the electrode terminal through the gap between the first protruding part and the insulating member. It effectively prevents electronic conduction between electrode terminal and shell component due to the presence of electrolyte by-products, thereby effectively protecting the insulation performance of the shell of the battery cell and improving the safety performance of the battery cell.

According to some embodiments of the present disclosure, at least one of the first protruding part and the insulating member is provided with a first groove, and at least a portion of the first sealing member is located in the first groove.

In the above technical solution, at least one of the first protruding part and the insulating member is equipped with a first groove, which plays an accommodating and limiting role in the first sealing member and can effectively improve the sealing effect of the first sealing member, thereby effectively ensuring the sealing performance between the first protruding part and the insulating member.

According to some embodiments of the present disclosure, the first protruding part forms a closed annular structure, the first groove is an annular groove arranged on the inner peripheral surface of the first protruding part, the first sealing member is sleeved on the outer peripheral surface of the insulating member, and at least a portion of the first sealing member is located inside the first groove.

In the above technical solution, the first protruding part forms a closed circular structure, and the first groove is a circular groove set on the inner circumferential surface of the first protrusion. At the same time, the first sealing member is sleeved on the outer circumferential surface of the insulating member. This arrangement is conducive to forming a circular seal between the first protruding part and the insulating member, thereby ensuring the sealing performance between the protruding part and the insulating member.

According to some embodiments of the present disclosure, the first protruding part is integrally formed with the shell component.

In the above technical solution, the first protruding part is integrally formed with the shell component to effectively ensure the stress stability and compressive strength of the first protruding part, which is conducive to fully exerting the blocking effect of the first protruding part on the electrolyte and improving the structural stability of the shell assembly.

According to some embodiments of the present disclosure, a terminal board is provided on the outer side of the shell component along its own thickness direction, wherein the terminal board is electrically connected to the electrode terminal, at least a portion of the insulating member is provided between the terminal board and the shell component, and the terminal board is insulated and isolated from the shell component through the insulating member.

In the above technical solution, a terminal board connected to the electrode terminal is arranged on the outer side of the shell assembly in the thickness direction of the shell component. The setting of the terminal board facilitates the convenience of connecting the battery cells and effectively improves the structural stability and strength of the electrode terminal. At least a portion of the insulating member is provided between the terminal board and the shell component, so as to insulate and isolate the terminal board from the shell component.

According to some embodiments of the present disclosure, the insulating member comprises a substrate, located between the terminal board and the shell component along the thickness direction of the shell component, wherein the second through-hole is provided on the substrate; and a side plate, connected to the substrate and at least partially arranged on one side of the terminal board along a second direction, wherein the second direction is perpendicular to the thickness direction of the shell component.

In the above technical solution, the substrate and the side plate of the insulating member provide good insulation and protection function for the terminal board. At the same time, the side plate has a certain limiting effect on the terminal board and effectively improves the adequacy of insulation and protection for the terminal board and shell component by the insulating member.

According to some embodiments of the present disclosure, the side plate is in a circular structure arranged around the terminal board, with the first protruding part surrounding the outer circumference of the side plate.

In the above technical solution, the side plate and substrate together form a cavity that can accommodate the terminal board, thereby further improving the limiting and insulation protection effect of the insulating member on the terminal board. The first protruding part is arranged around the periphery of the side plate, which can effectively block electrolyte entering the gap between the substrate of the insulating member and the outer surface of the shell component, thereby reducing the risk of electrolyte entering the gap between the shell component and the electrode terminal and conducting the shell component and the electrode terminal, thereby effectively improving the safety of the battery cell where the shell assembly is located.

According to some embodiments of the present disclosure, the terminal board comprises a first surface facing away from the outer surface, with a distance of D from the first surface to the outer surface, and a height of H from the first protruding part protruding from the outer surface, satisfying H ≤ D.

In the above technical solution, if the height of the first protruding part protruding from the outer surface exceeds the first surface of the terminal board, it is easy to cause positional interference in the connection between the terminal board and the current flow component of the battery, and it will occupy too much external space of the battery cell where the shell assembly is located, which is not conducive to improving the space utilization rate of the battery. The height of the first protruding part protruding from the outer surface is limited to the range not exceeding the first surface of the terminal board, which can effectively reduce the risk of position interference caused by the first protruding part on the battery connection, and is conducive to ensuring the energy density of the battery.

According to some embodiments of the present disclosure, the height of the first protruding part protruding from the outer surface is H, which satisfies that H is ≥ 0.5mm.

In the above technical solution, if the height of the first protruding part protruding from the outer surface is too small, it cannot have a good flow blocking effect, and the liquid is easy to overflow the first protruding part and enter the gap between the shell component and the insulating member. The height of the first protruding part protruding from the outer surface is greater than or equal to 0.5mm, which can effectively increase the difficulty of the electrolyte on the outer surface overflowing the first protruding part, thereby effectively ensuring the blocking effect of the first protruding part on the electrolyte on the outer surface of the end cover.

According to some embodiments of the present disclosure, the insulating member comprises: a substrate, arranged on the outer side of the shell component along its own thickness direction, wherein the substrate comprises a second surface facing the shell component; and a boss, arranged on the substrate, wherein the boss protrudes from the second surface and is inserted into the first through-hole, and the second through-hole penetrates through the substrate and the boss.

In the above technical solution, a boss is set on the second surface of the insulating component facing the shell component, which is inserted into the first through-hole. The boss can effectively isolate the outer peripheral surface of the electrode terminal and the hole wall of the first through-hole, thereby effectively ensuring the insulation and isolation effect of the insulating member on the shell component and the electrode terminal. Moreover, the boss plays a limiting role in the relative position between the insulating member and the shell component. At the same time, the boss can play a certain blocking role, thereby increasing the difficulty of liquid entering the gap between the shell component and the electrode terminal through the gap between the insulating member and the shell component, thereby providing a certain blocking effect on the electrolyte.

According to some embodiments of the present disclosure, the flow blocking component comprises a second protruding part, wherein the second protruding part protrudes from the outer peripheral surface of the boss, and the second protruding part abuts against the hole wall of the first through-hole; or the second protruding part protrudes from the hole wall of the first through-hole, and the second protruding part abuts against the outer peripheral surface of the boss.

In the above technical solution, the flow blocking component includes a second protruding part, which protrudes from the outer peripheral surface of the boss and abuts against the hole wall of the first through-hole, or protrudes from the hole wall of the first through-hole and abuts against the outer peripheral surface of the boss. The second protruding part can further block the electrolyte from entering, from the gap between the boss and the first through-hole, the gap between the shell component and the electrode terminal, thereby avoiding electronic conduction between electrode terminal and shell component due to the presence of electrolyte, so as to improve the safety performance of the battery cell where the shell assembly is located. According to some embodiments of the present disclosure, the flow blocking component comprises a second sealing member, provided between the outer peripheral surface of the boss and the hole wall of the first through-hole.

In the above technical solution, by setting a second insulating member, the boss of the insulating member is sealed and connected to the hole wall of the first through-hole of the shell component. The second sealing member can effectively prevent the electrolyte from entering, from the gap between the boss and the first through-hole, the gap between the shell component and the electrode terminal. It avoids electronic conduction between electrode terminal and shell component due to the presence of electrolyte, thereby preventing the migration of metal ions in shell component due to electronic conduction, so as to improve the safety performance of battery cells.

According to some embodiments of the present disclosure, the hole wall of the first through-hole is provided with a second groove, and at least a portion of the second sealing member is located in the second groove.

In the above technical solution, a second groove is set on the hole wall of the first through-hole, which plays an accommodating and limiting role in the second sealing member, and can effectively improve the sealing effect of the second sealing member, thereby effectively ensuring the sealing performance between the boss and the first through-hole.

According to some embodiments of the present disclosure, the second groove extends to the outer surface of the shell component.

In the above technical solution, the second groove extends to the outer surface of the shell component, which is conducive to the assembly of the shell assembly. During the assembly process of the shell assembly, it is easy for the second sealing member to be embedded into the second groove for positioning, which is conducive to ensuring the sealing effect of the second sealing member.

According to some embodiments of the present disclosure, the insulating member comprises a substrate, arranged on the outer side of the shell component along its own thickness direction, wherein the substrate comprises a second surface facing the shell component, and the second surface is provided with a third groove; and the flow blocking component further comprises a third protruding part, protruding from the outer surface and inserted into the third groove.

In the above technical solution, a third groove is set on the second surface of the insulating member facing the upper surface, and a third protruding part is set on the upper surface of the shell component and inserted into the third groove, thereby forming a sealed connection between the shell component and the insulating member, thereby preventing electrolyte from entering the gap between the shell component and the electrode terminal along the gap between the shell component and the insulating member, reducing the possibility of electronic conduction between electrode terminal and shell component, and improving the safety and quality of the battery cell where the shell assembly is located.

According to some embodiments of the present disclosure, the third protruding part forms a circular protrusion arranged around the electrode terminal.

In the above technical solution, the third protruding part forms a circular protrusion arranged around the electrode terminal to enclose the electrode terminal in a closed space formed by the third protruding part, thereby effectively blocking the electrolyte from approaching the electrode terminal from any direction, and further reducing the possibility of electronic conduction between the electrode terminal and the shell component.

According to some embodiments of the present disclosure, a first liquid injection hole is provided on the shell component.

In the above technical solution, a first liquid injection hole is formed on the shell component to facilitate liquid injection into the battery cell where the shell assembly is located through the first liquid injection hole.

In the second aspect, the present disclosure provides a battery cell, including a shell assembly as described in any of the above solutions.

According to some embodiments of the present disclosure, the battery cell comprises: a casing with a first opening; and a first end cover, configured to cover the first opening, wherein the shell component is the first end cover or casing.

In the above technical solution, the shell component can be the casing of the battery cell or the end cover of the battery cell. The battery cell where the shell assembly is located can effectively prevent electrolyte from entering the gap between the shell component and the insulating member through the outer surface of the casing or end cover, and ultimately entering the gap between the shell component and the electrode assembly, which causes electronic conduction between the end cover and the casing and electrode terminal due to the presence of by-products of electrolyte. This effectively reduces the risk of corrosion and leakage of the casing and end cover, and improves the safety performance and quality of the battery cells.

According to some embodiments of the present disclosure, the casing further has a second opening opposite to the first opening, and the battery cell further comprises a second end cover, configured to cover the second opening; and the first end cover is the shell component, and the second end cover is provided with a second liquid injection hole.

In the above technical solution, the shell has a first opening and a second opening arranged oppositely. The first end cover that covers the first opening is the shell component of any of the above solutions, and the end cover that covers the second opening is provided with a second liquid injection hole. When assembling the battery cell, electrolyte can be injected into the battery cell through the second liquid injection hole. When the battery cell experiences spraying during electrolyte injection, the electrolyte is sprayed out through the liquid injection hole and flows along the outer surface of the casing to the outer surface of the first end cover. The first end cover is equipped with a flow blocking component, which can effectively prevent the electrolyte from entering the gap between the shell component and the electrode terminal, thereby effectively reducing the possibility of electronic conduction between the shell component and the casing and the electrode terminal due to the presence of electrolyte by-products.

In the third aspect, the present disclosure provides a battery, including a battery cell as described in any of the above solutions.

In the fourth aspect, the present disclosure provides an electrical equipment comprising a battery cell as described in any of the above solutions, wherein the battery cell is configured to provide electrical energy; or comprising the battery described in the above solution, wherein the battery is configured to provide electrical energy.

### Brief Description of Drawings

In order to more clearly illustrate technical solutions of embodiments of the present disclosure, drawings required for use in the embodiments of the present disclosure will be described briefly below. It is obvious that the drawings in the following description are merely illustrative of some embodiments of the present disclosure. It will be understood by those of ordinary skill in the art that other drawings can also be obtained according to the drawings without any inventive effort.
FIG. 1 is a schematic view of the structure of the vehicle provided in some embodiments of the present disclosure;
FIG. 2 is an exploded view of the battery provided in some embodiments of the present disclosure;
FIG. 3 is a schematic view of a structure of the battery cell provided in some embodiments of the present disclosure;
FIG. 4 is an exploded view of the battery cell provided in some embodiments of the present disclosure;
FIG. 5 is an exploded view of the shell assembly provided in some embodiments of the present disclosure;
FIG. 6 is a structural schematic view of the shell component provided in some embodiments of the present disclosure;
FIG. 7 is a structural schematic view of the insulating member provided in some embodiments of the present disclosure;
FIG. 8 is a top view of the shell assembly provided in some embodiments of the present disclosure;
FIG. 9 is a sectional view in some embodiments in the A-A direction shown in FIG. 8;
FIG. 10 is an exploded view of the shell assembly provided in some other embodiments of the present disclosure;
FIG. 11 is a structural schematic view of the insulating member provided in some other embodiments of the present disclosure;
FIG. 12 is a top view of the shell assembly provided in some other embodiments of the present disclosure;
FIG. 13 is a sectional view in the B-B direction shown in FIG. 12;
FIG. 14 is a partially enlarged view of the part C shown in FIG. 13;
FIG. 15 is a sectional view in some other embodiments in the B-B direction shown in FIG. 12;
FIG. 16 is a partially enlarged view of the part D shown in FIG. 15;
FIG. 17 is a sectional view in some other embodiments in the B-B direction shown in FIG. 12;
FIG. 18 is a partially enlarged view of the part E shown in FIG. 17;
FIG. 19 is a sectional view in some other embodiments in the A-A direction shown in FIG. 8;
FIG. 20 is a sectional view in some other embodiments in the A-A direction shown in FIG. 8; and
FIG. 21 is a partially enlarged view of the part F shown in FIG. 20.

In the drawings, they are not drawn to the actual scale.

Reference signs: 1000-vehicle; 100-battery; 10-box; 11-first part; 12-second part; 20-battery cell; 21-shell assembly; 211-shell component; 211a-first end cover; 211b-second end cover; 2111 -first through-hole; 2112-outer surface; 212-insulating member; 2121-substrate; 2122-second through-hole; 2123-side plate; 2124-boss; 2125-second surface; 213-electrode terminal; 214-first protruding part; 2141-first groove; 215-first sealing member; 216- terminal board; 2161-first surface; 217-second protruding part; 218-second sealing member; 219-second groove; 220-insulating component; 221-third protruding part; 222-third groove; 22-casing; 23-electrode assembly; 24-second liquid injection hole; 2201-first opening; 2202-second opening; 200-controller; and 300-motor.

### Detailed Description of Embodiments

In order to make the objectives, technical solutions and advantages of the embodiments of the present disclosure clearer, the technical solutions in the embodiments of the present disclosure will be described clearly and completely below with reference to the drawings in the embodiments of the present disclosure. Obviously, the embodiments described are some of, rather than all of, the embodiments of the present disclosure. The components of the embodiments of the present disclosure, typically described and shown in the drawings herein, can be arranged and designed in various different configurations.

Therefore, the following detailed description of the embodiments of the present disclosure provided in the drawings is not intended to limit the scope of the present disclosure, but only to represent the selected embodiments of the present disclosure. All the other embodiments obtained by those of ordinary skill in the art based on the embodiments of the present disclosure without any creative effort shall fall within the scope of protection of the present disclosure.

The following will provide a detailed description to the embodiments of the technical solution of the present disclosure in conjunction with the drawings. The following embodiments are only used to provide a clearer explanation of the technical solution of the present disclosure, and therefore are only examples and cannot be used to limit the scope of protection of the present disclosure.

Unless otherwise defined, all technical and scientific terms used in the present disclosure have the same meanings as those commonly understood by those skilled in the art to which the present disclosure belongs. The terms used in the present disclosure are merely for the purpose of describing specific embodiments, but are not intended to limit the present disclosure. The terms "comprise/include", "provide", and any variations thereof in the description and claims, as well as the brief description of the drawings described above of the present disclosure are intended to cover non-exclusive inclusions.

In the description of the embodiments of the present disclosure, the technical terms "first", "second", etc. are only used to distinguish different objects and cannot be understood as indicating or implying relative importance or implying the quantity, specific order, or primary and secondary relationship of the indicated technical features. In the description of the embodiments of the present disclosure, the meaning of "multiple" refers to two or more, unless otherwise expressly specified.

In the present disclosure, the phrase "embodiment" mentioned means that the specific features, structures, or characteristics described with reference to the embodiments may be encompassed in at least one embodiment of the present disclosure. The phrase at various locations in the description does not necessarily refer to the same embodiment, or an independent or alternative embodiment exclusive of another embodiment. Those skilled in the art should understand, in explicit and implicit manners, that an embodiment described in the present disclosure may be combined with another embodiment.

The term "multiple (a plurality of)" in the description of the embodiments of the present disclosure refers to two or more (including two).

In the description of embodiments of the present disclosure, the orientation or positional relationship indicated by the technical terms "center", "longitudinal", "transverse", "length", "width", "thickness", "up", "down", "front", "back", "left", "right", "vertical", "horizontal", "top", "bottom", "inside", "outside", "clockwise", "counterclockwise", "axial", "radial", "circumferential" is based on the orientation or positional relationship shown in the drawings, and it is only for facilitating describing the embodiments of the present disclosure and simplifying the description, rather than indicating or implying that the related apparatus or element must be in a specific orientation, or constructed or operated in a specific orientation, and therefore it cannot be understood as a limitation to the embodiments of the present disclosure.

In the description of the embodiments of the present disclosure, unless otherwise expressly specified and defined, the technical terms "arrange", "mount", "connect", "connection", and "fix" should be broadly understood, for example, it may be a fixed connection, or a detachable connection, or integrally formed; it may be a mechanical connection, electrical connection or signal connection; it may be a direct connection, an indirect connection through an intermediate medium, or a communication of interiors or interaction relationship of two elements. For those of ordinary skill in the art, the specific meaning of the foregoing terms in the embodiments of the present disclosure may be understood according to specific circumstances.

In the embodiments of the present disclosure, the same reference signs represent the same components, and for simplicity, detailed descriptions for the same components are omitted in different embodiments. It should be understood that the thickness, length, width, and other dimensions of various components in the embodiments of the present disclosure shown in the drawings, as well as the overall thickness, length, width, and other dimensions of the integrated device, are only illustrative examples and should not constitute any limitations to the present disclosure.

The battery mentioned in the embodiments of the present disclosure refers to a single physical module that includes one or more battery cells to provide higher voltage and capacity. Multiple battery cells can be connected in series, parallel, or hybrid. The battery can further include a box used to encapsulate one or more battery cells. The box can prevent liquids or other foreign objects from affecting the charging or discharging of battery cells.

In the present disclosure, the battery cell can include a lithium ion secondary battery, a lithium ion primary battery, a lithium sulfur battery, a sodium lithium ion battery, a sodium ion battery or a magnesium ion battery, etc., which is not limited by the embodiments of the present disclosure. This is not limited in the embodiment of the present disclosure. The battery cell can be cylindrical, flat, or rectangular, or be of other shapes, which is also not limited by the embodiments of the present disclosure.

The battery cell includes a shell, an electrode assembly and an electrolyte, and the electrode assembly is composed of a positive electrode plate, a negative electrode plate, and a separator. Battery cells mainly rely on metal ions moving between the positive and negative electrode plates to operate. The shell provides a storage space for the electrode assembly and electrolyte, and generally includes a casing and an end cover. The casing has an opening, and the end cover is used to cover the opening of the casing to limit the storage space for accommodating the electrode assembly and electrolyte.

How to improve the safety performance of the battery is an urgent problem that needs to be solved in the development of battery technology. The inventor found that the shell of battery cells is prone to corrosion, which has significant safety hazards.

In order to effectively improve the safety of battery cells, the inventor analyzed the reasons and found that in related technologies, electrolyte is injected into the battery casing through the liquid injection hole set on the shell of the battery cell. The electrolyte easily flows into the gap between the electrode terminals and the shell, which can easily cause corrosion of the shell. Specifically, when injecting electrolyte into the interior of the battery cell, when the amount of electrolyte inside the battery cell is sufficient, the electrolyte will flow out of the battery cell in the opposite direction through the liquid injection hole, and the electrolyte overflowing from the battery cell will flow along the outer surface of the shell. During this process, the electrolyte may flow along the gap between the shell and the insulating member towards the installation hole where the electrode terminal is located. There is originally a certain gap between the inner wall of the installation hole of the shell and the outer wall of the electrode terminal. If the electrolyte enters this gap, the by-products of the electrolyte will cause electronic conduction between the electrode terminal and the shell. If the positive electrode terminal is electrically conductive to the shell, it will cause the shell to be positively charged, which means that the positive electrode and shell are at the same potential. If the negative electrode terminal is electrically conductive to the shell, it will cause the shell to be negatively charged. Whether the shell is positively or negatively charged, it will bring certain safety hazards. Especially, if the shell is negatively charged, it may cause corrosion and leakage of the shell.

Based on the above reasons, in order to reduce or even eliminate the phenomenon of electronic conduction between the electrode terminals and the shell, the inventor of the present disclosure provides a shell assembly, which is equipped with a flow blocking component for blocking electrolyte from entering, from the gap between the shell and the insulating member, the gap between the shell and the electrode terminals. When injecting electrolyte into the battery casing where the shell assembly is located, the flow blocking component can effectively block the electrolyte from flowing into the gap between the shell and electrode terminals through the gap between the shell and the insulating member, thereby reducing the possibility of electronic conduction caused by the electrolyte entering the gap between the shell and electrode terminals, thereby reducing the risk of corrosion and leakage of the shell of the battery cell, and effectively improving the safety performance of the battery cell.

The battery cell disclosed in the embodiments of the present disclosure where the shell assembly is located can be used in, but is not limited to, electrical equipment such as vehicles, ships, or aircraft. The battery cell, battery, etc. disclosed in the present disclosure can be used to form the power supply system of the electrical equipment.

The embodiment of the present disclosure provides an electrical equipment using a battery as a power source, which can be but is not limited to mobile phones, tablet computers, laptops, electric toys, electric tools, electromobile, electric vehicles, ships, spacecraft, and so on. In the above, electric toys can include fixed or mobile electric toys, such as game consoles, electric car toys, electric ship toys and electric aircraft toys, and spacecraft can include aircraft, rockets, space shuttles and spaceships, etc.

The battery described in the embodiment of the present disclosure is not only applicable to the aforementioned electrical equipment, but can also be applicable to all electrical equipment that use batteries. However, for the sake of simplicity, the following embodiment takes an electrical equipment being a vehicle as an example to illustrate.

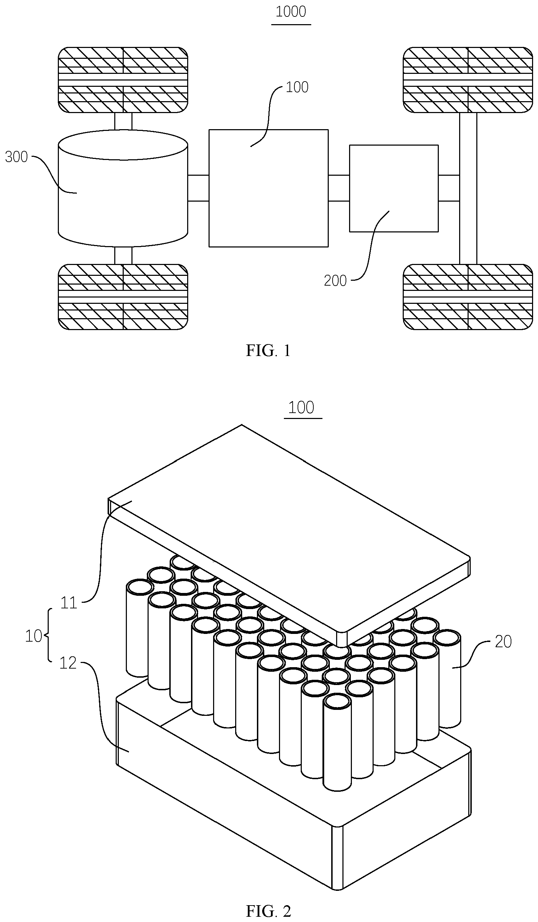

Referring to FIG. 1, FIG. 1 is a structural schematic view of the vehicle 1000 provided in some embodiments of the present disclosure. The vehicle 1000 can be a fuel powered vehicle, a gas powered vehicle, or a new energy vehicle. The new energy vehicle can be a pure electric vehicle, a hybrid electric vehicle, or an extended range vehicle, etc. The interior of vehicle 1000 is equipped with battery 100, which can be installed at the bottom, head, or tail of vehicle 1000. Battery 100 can be used for the power supply for the vehicle 1000. For example, battery 100 can serve as the operating power supply for vehicle 1000. The vehicle 1000 can also include a controller 200 and a motor 300, wherein the controller 200 is used to control the battery 100 to supply power to the motor 300, for example, used for the working power demand during startup, navigation, and running of the vehicle 1000.

In some other embodiments, the battery 100 can not only serve as the operating power source for vehicle 1000, but also as the driving power source for vehicle 1000, thereby replacing or partially replacing fuel or natural gas to provide driving power for vehicle 1000.

Referring to FIG. 2, FIG. 2 is an explosion view of the battery 100 provided in some embodiments of the present disclosure, which can include a box 10 and one or more battery cell 20. The battery cell 20 is accommodated within the box 10. In the above, the box 10 is used to provide accommodating space for the battery cell 20, and the box 10 can be of various structures. In some embodiments, the box 10 may include a first part 11 and a second part 12, with the first part 11 and the second part 12 covering each other. The first part 11 and the second part 12 jointly define an accommodating space for accommodating the battery cell 20. The second part 12 can be in a hollow structure with an opening at one end, the first part 11 can be in a plate-shaped structure, and the first part 11 is covered on the opening side of the second part 12 to jointly define the accommodating space by the first part 11 and the second part 12. The first part 11 and the second part 12 can also both be in hollow structure with an opening on one side, and the opening side of the first part 11 is covered on the opening side of the second part 12. Of course, the box 10 formed by the first part 11 and the second part 12 can be of various shapes, such as cuboid, cube, etc.

In the battery 100, multiple battery cells 20 can be connected in series, parallel, or hybrid. Hybrid connection means that both series connection and parallel connection exist among multiple battery cells 20. In some embodiments, multiple battery cells 20 can be first connected in series, parallel, or hybrid to form a battery module, and multiple battery modules are then connected in series, parallel, or hybrid to form a whole to be accommodated in the box 10. In some other embodiments, all battery cells 20 can be directly connected in series, parallel, or hybrid together, and then the entire body composed of all battery cells 20 can be accommodated in the box 10.

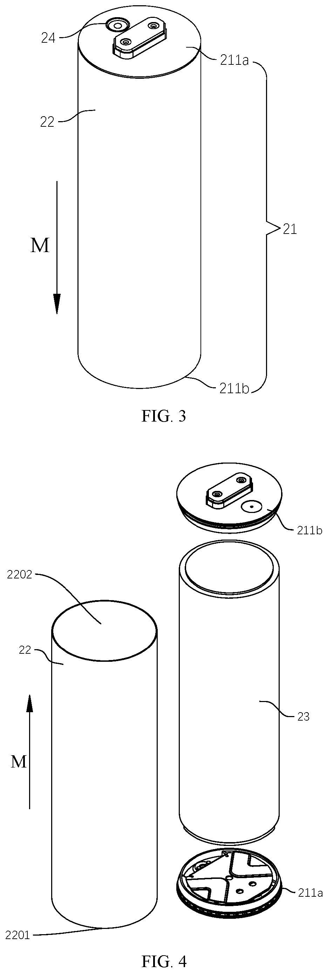

Referring to FIGS. 3 and 4, FIG. 3 is a schematic view of a structure of the battery cell 20 provided in some embodiments of the present disclosure; and FIG. 4 is an exploded view of the battery cell 20 provided in some embodiments of the present disclosure, wherein the top and bottom of FIGS. 3 and 4 are reversed, and M in FIGS. 3 and 4 represents the electrolyte injection path. The battery cell 20 may include a shell and electrode assembly 23. The shell can include a casing 22 and an end cover. The casing 22 is a component used to accommodate the electrode assembly 23. The casing 22 can be a hollow structure with one end forming an opening, and the casing 22 can also be a hollow structure with both ends forming openings. The casing 22 can be of various shapes, such as cylinder, cuboid, etc. The material of casing 22 can be various, such as copper, iron, aluminum, steel, aluminum alloy, etc. In casing 22, one or multiple electrode assemblies 23 can be provided.

The electrode assembly 23 is a component in the battery cell 20 that undergoes electrochemical reactions. The electrode assembly 23 can include a positive electrode plate, a negative electrode plate, and a separator. The electrode assembly 23 can be in a wound structure formed by winding the positive electrode plate, the separator, and the negative electrode plate, or a stacked structure formed by stacking the positive electrode plate, the separator, and the negative electrode plate.

The end cover can be a component that blocks the opening of the casing 22 to isolate the internal environment of the battery cell 20 from the external environment. The end cover and the casing 22 jointly define a sealed space for accommodating the electrode assembly 23, the electrolyte, and other components. In the battery cell 20, one or two end covers can be provided. In the embodiment where the casing 22 is of a hollow structure with openings formed at both ends, two end covers can be provided correspondingly, and the two end covers each cover the two openings of the casing 22. The two end covers and the casing 22 jointly define a sealed space. In the embodiment where the casing 22 is of a hollow structure with an opening formed at one end, one end cover can be provided correspondingly, and the end cover covers the opening of the casing 22. The end cover and the casing 22 jointly define a sealed space.

The battery cell also includes a shell assembly 21, and the shell component 211 of the shell assembly 21 can be either the casing 22 of the shell or the end cover of the shell. It can be understood that depending on the structure of the shell, the shell component 211 can be any wall of the shell of the battery cell 20, or the shell component 211 can directly form the shell. The electrode terminal 213 of the shell assembly 21 is used for electrical connection with the electrode assembly 23 to lead out electrical energy from the battery cell 20.

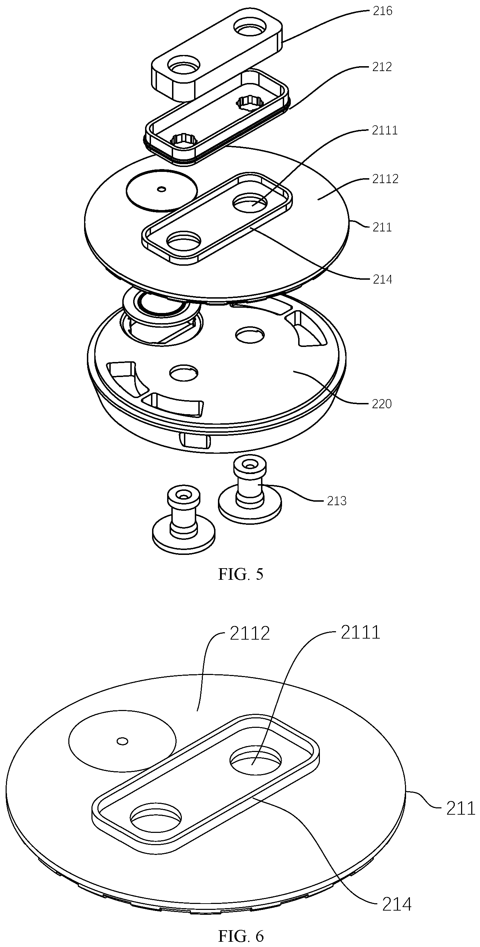

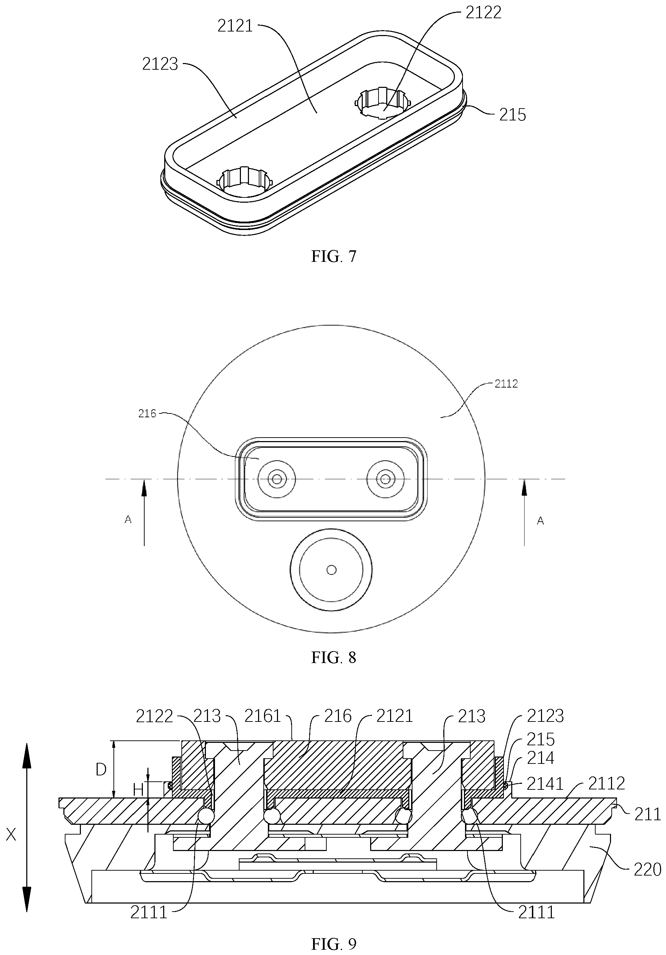

Referring to FIGS. 5 to 9, FIG. 5 is an exploded view of the shell assembly 21 provided in some embodiments of the present disclosure; FIG. 6 is a structural schematic view of the shell component 211 provided in some embodiments of the present disclosure; FIG. 7 is a structural schematic view of the insulating member 212 provided in some embodiments of the present disclosure; FIG. 8 is a top view of the shell assembly 21 provided in some embodiments of the present disclosure; and FIG. 9 is a sectional view in some embodiments in the A-A direction shown in FIG. 8. Some embodiments of the present disclosure provide a shell assembly 21, which includes a shell component 211, an insulating member 212, an electrode terminal 213, and a flow blocking component. The shell component 211 includes an inner surface and an outer surface 2112 arranged oppositely, and a first through-hole 2111 penetrating the inner surface and the outer surface 2112. The insulating member 212 is at least partially located on the outer surface 2112 of the shell component 211, wherein the insulating member 212 comprises a second through-hole 2122 communicated with the first through-hole 2111. The electrode terminal 213 is installed in the first through-hole 2111 and the second through-hole 2122 to insulate and isolate from the shell component 211 through the insulating member 212. The flow blocking component is configured to block liquid from entering the gap between the shell component 211 and the electrode terminal 213 through the gap between the insulating member 212 and the shell component 211.

As mentioned earlier, the shell component 211 can be any wall portion used to form a shell that accommodates the electrode assembly 23. The materials of the shell component 211 can be various, such as copper, iron, aluminum, steel, aluminum alloy, etc.

The outer surface 2112 of the shell component 211 refers to the surface of the shell component 211 away from the electrode assembly 23, and the inner surface of the shell component 211 refers to the surface of the shell component 211 facing the electrode assembly 23. The outer surface 2112 and inner surface of the shell component 211 are arranged oppositely to each other along the thickness direction X of the shell component 211.

The electrode terminal 213 is a component used to output the electrical energy of the battery cell 20. The electrode terminals 213 on the shell component 211 can be in one group or two groups. If the electrode terminals 213 on the shell component 211 are in one group, the battery cell 20 can be equipped with two shell assemblies 21, and the electrode terminals 213 in the two shell assemblies 21 are respectively connected to the positive and negative tabs of the electrode assembly 23. If there are two groups of electrode terminals 213 on the shell component 211, the casing 22 can be equipped with one shell assembly 21, and the two groups of electrode terminals 213 are respectively electrically connected to the positive and negative tabs of the electrode assembly 23.

Insulating member 212 is a component used to insulate and isolate the shell component 211 from the electrode terminal 213. At least a portion of the insulating member 212 is located on the outer side of the shell component 211 along the thickness direction X, which means that at least a portion of the insulating member 212 is located on the side of the shell component 211 away from the electrode assembly 23. The insulating member 212 is made of insulating material, and the materials of the insulating member 212 can be selected from: polypropylene, polycarbonate, polytetrafluoroethylene, polyvinyl chloride, polyethylene, polyester resin and other insulation and electrolyte resistant materials.

The insulating member 212 includes a second through-hole 2122, which is communicated with the first through-hole 2111 and penetrates through the insulating member 212. The first through-hole 2111 and the second through-hole 2122 are used for the electrode terminal 213 to be inserted therein, so that a portion of the electrode terminal 213 is exposed on the inner side of the shell component 211 along the thickness direction X to connect with the electrode assembly 23. The other part of the electrode terminal 213 is exposed on the outer side of the shell component 211 along the thickness direction X to lead out the electrical energy of the battery cell 20.

The flow blocking component is used to block the electrolyte from entering, through the gap between the outer surface 2112 of the shell component 211 and the insulating member 212, the gap between the shell component 211 and the electrode terminal 213. There are various forms of implementation of the flow blocking component. The flow blocking component can be set on the outer periphery of the insulating member 212 to block the electrolyte from entering the gap between the insulating member 212 and the shell component 211, or can be set between the insulating member 212 and the outer surface 2112 of the shell component 211, or can also be set between the insulating member 212 and the hole wall of the first through-hole 2111, as long as it can block the electrolyte from entering, through the gap between the outer surface 2112 of the shell component 211 and the insulating member 212, the gap between the shell component 211 and the electrode terminal 213. The various implementation methods of flow blocking components will be introduced later.

Due to the arrangement of a flow blocking component on the shell assembly 21, when injecting electrolyte into the casing 22 of the battery 100 where the shell assembly 21 is applied, the flow blocking component can effectively block the electrolyte from flowing through the gap between the shell component 211 and the insulating member 212 into the gap between the shell component 211 and the electrode terminal 213, thereby effectively reducing the possibility of electronic conduction between the shell component 211 and the electrode terminal 213 due to the presence of electrolyte by-products, which further reduces the risk of corrosion and leakage of the shell of the battery cell 20, and effectively improves the safety performance and quality of the battery cell 20.

According to some embodiments of the present disclosure, as shown in FIGS. 5 to 9, the flow blocking component comprises a first protruding part 214 protruding from the outer surface 2112 of the shell component 211, and the first protruding part 214 is arranged on the outer periphery of the insulating member 212.

That is to say, the first protruding part 214 protrudes from the outer surface 2112 of the shell component 211 to a certain height. The first protruding part 214 can extend along the outer circumference of the insulating member 212 to form a closed or unclosed annular structure on the outer surface 2112 of the shell component 211. Of course, the first protruding part 214 can also be located on one side or multiple positions of the outer circumference of the insulating member 212 (for example, arranged on one side of the insulating member 212 facing the main flow direction of the liquid on the shell component 211 to specifically block the liquid). It should be understood that the number of the first protruding part 214 can be one or multiple arranged around the outer circumference of the insulating member 212.

The first protruding part 214 and the shell component 211 can be sealed and connected by welding, gluing and other methods to ensure the blocking effect on the electrolyte.

The flow blocking component includes a first protruding part 214 protruding from the outer surface 2112 of the shell component 211. The first protruding part 214 can effectively block the electrolyte on the outer surface 2112 of the shell component 211 from entering the gap between the shell component 211 and the insulating member 212, thereby reducing the possibility of electrolyte entering the gap between the shell component 211 and the electrode terminal 213 from the source, and effectively improving the safety of the battery cell 20.

According to some embodiments of the present disclosure, the first protruding part 214 forms a closed annular structure.

Specifically, the first protruding part 214 extends along the outer circumference of the insulating member 212 on the outer surface 2112 of the shell component 211 and forms a closed annular area, within which the insulating member 212 is located.

The shape and size of the closed annular area formed by the first protruding part 214 can match the cross-sectional shape and size of the insulating member 212. For example, if the shape of the insulating member 212 in the plane perpendicular to the thickness direction X of the shell component 211 is rectangular, then the first protruding part 214 forms a rectangular ring structure around the outer surface 2112 of the shell component 211. Of course, the shape of the closed annular area formed by the first protruding part 214 can also be different from the cross-sectional shape of the insulating member 212.

The first protruding part 214 surrounds the insulating member 212 in a closed circular structure formed by the first protruding part 214, and the first protruding part 214 surrounds the outer circumference of the insulating member 212, thereby further reducing the possibility of electrolyte entering the gap between the shell component 211 and the electrode terminal 213, and further effectively improving the safety of the battery cell 20 where the shell assembly 21 is located.

According to some embodiments of the present disclosure, as shown in FIGS. 7 to 9, the flow blocking component further comprises: a first sealing member 215, wherein the first sealing member 215 is sandwiched between the first protruding part 214 and the insulating member 212.

It can be understood that the first sealing member 215 can correspond to the position and quantity of the first protruding part 214, and the length of the first sealing member 215 extending along the circumferential direction of the insulating member 212 can also correspond to the size of the first protruding part 214 in that direction. When the first protruding part 214 forms a closed annular structure, the first sealing member 215 can also extend along the circumferential direction of the first protruding part 214 to form a closed annular structure. For example, the first sealing member 215 can use a sealing ring to cover any gaps that may exist between the inner peripheral surface of the first protruding part 214 and the outer peripheral surface of the insulating member 212.

By setting a first sealing member 215, the first protruding part 214 and the insulating member 212 are sealed and connected. Even if a small amount of electrolyte may overflow the top of the first protruding part 214 and enters the position between the first protruding part 214 and the insulating member 212, the first sealing member 215 can effectively prevent the electrolyte from entering the gap between the shell component 211 and the electrode terminal 213 through the gap between the first protruding part 214 and the insulating member 212. It effectively prevents electronic conduction between electrode terminal 213 and shell component 211 due to the presence of electrolyte by-products, thereby effectively protecting the insulation performance of the shell of the battery cell 20 and improving the safety performance of the battery cell 20.

According to some embodiments of the present disclosure, at least one of the first protruding part 214 and the insulating member 212 is provided with a first groove 2141, and at least a portion of the first sealing member 215 is located in the first groove 2141.

Specifically, the first groove 2141 can be located on the inner peripheral surface of the first protruding part 214, or on the outer peripheral surface of the insulating member 212. Alternatively, both the inner peripheral surface of the first protruding part 214 and the outer peripheral surface of the insulating member 212 are provided with a first groove 2141, which can extend along the circumferential direction of the insulating member 212.

At least one of the first protruding part 214 and the insulating member 212 is equipped with a first groove 2141, which plays an accommodating and limiting role in the first sealing member 215 and can effectively improve the sealing effect of the first sealing member 215, thereby effectively ensuring the sealing performance between the first protruding part 214 and the insulating member 212.

According to some embodiments of the present disclosure, as shown in FIG. 9, the first protruding part 214 forms a closed annular structure, the first groove 2141 is an annular groove arranged on the inner peripheral surface of the first protruding part 214, the first sealing member 215 is sleeved on the outer peripheral surface of the insulating member 212, and at least a portion of the first sealing member 215 is located inside the first groove 2141.

Specifically, a first groove 2141 is set on the inner peripheral surface of the first protruding part 214 in a closed circular shape, and the first groove 2141 extends along the circumferential direction of the first protruding part 214 to form a circular groove. The first sealing member 215 is sleeved on the outer peripheral surface of the insulating member 212. After the shell assembly 21 is assembled, the insulating member 212 is set on the inner ring of the first protruding part 214. The part of the first sealing member 215 sleeved on the outer peripheral surface of the insulating member 212 is embedded in the first groove 2141 of the inner peripheral surface of the first protruding part 214, so as to achieve seal between the inner peripheral surface of the first protruding part 214 and the outer peripheral surface of the insulating member 212.

The first groove 2141 is arranged on the inner peripheral surface of the first protruding part 214, and the first sealing member 215 is sleeved on the outer peripheral surface of the insulating member 212. This arrangement has a simple structure, facilitates the manufacturing and grouping of the shell assembly 21, and effectively ensures the sealing effect of the first sealing member 215.

According to some embodiments of the present disclosure, the first protruding part 214 is integrally formed with the shell component 211.

The first protruding part 214 is integrally formed with the shell component 211 to effectively ensure the stress stability and compressive strength of the first protruding part 214, which is conducive to fully exerting the blocking effect of the first protruding part 214 on the electrolyte and improving the structural stability of the shell assembly 21.

According to some embodiments of the present disclosure, referring to FIG. 5 again, the shell assembly 21 also includes a terminal board 216, which is located on the outer side of the shell component 211 along the thickness direction X. The terminal board 216 is connected to the electrode terminal 213, and at least a portion of the insulating member 212 is provided between the terminal board 216 and the shell component 211. The terminal board 216 is insulated and isolated from the shell component 211 through the insulating member 212.

Terminal board 216 and electrode terminal 213 can be connected in various ways, such as welding, riveting, etc. The setting of terminal board 216 facilitates the fixation and connection of electrode terminals 213, improves the convenience of connecting battery cells 20, and effectively improves the structural stability and strength of electrode terminals 213. At least a portion of the insulating member 212 is provided between the terminal board 216 and the shell component 211, so as to insulate and isolate the terminal board 216 from the shell component 211.

According to some embodiments of the present disclosure, referring to FIG. 5 continuously and referring to FIGS. 7 to 9 together, the insulating member 212 comprises a substrate 2121 and side plate 2123, wherein the substrate 2121 is located between the terminal board 216 and the shell component 211 along the thickness direction X of the shell component 211, wherein the second through-hole 2122 is provided on the substrate 2121; and the side plate 2123 is connected to the substrate 2121 and at least partially arranged on one side of the terminal board 216 along a first direction, wherein the first direction is perpendicular to the thickness direction X of the shell component 211.

Specifically, the substrate 2121 can be in a roughly plate-like structure and be located between the outer surface 2112 of the shell component 211 and the side of the terminal board 216 facing the shell component 211. The second through-hole 2122 is provided on the substrate 2121 and penetrates through the substrate 2121. The second through-hole 2122 is communicated with the first through-hole 2111 provided on the shell component 211.

It can be understood that the first direction can be any direction within the plane perpendicular to the thickness direction X. The substrate 2121 and side plate 2123 can be formed integrally or set separately and connected to each other. Side plate 2123 can be fully arranged on one side of terminal board 216 along the first direction, and side plate 2123 can also be partially arranged on one side of terminal board 216 along the first direction. Side plate 2123 can extend along the circumferential direction of terminal board 216.

The substrate 2121 and the side plate 2123 of the insulating member 212 provide good insulation and protection function for the terminal board 216. At the same time, the side plate 2123 has a certain limiting effect on the terminal board 216 and effectively improves the adequacy of insulation and protection for the terminal board 216 and shell component 211 by the insulating member 212.

According to some embodiments of the present disclosure, the side plate 2123 is in a circular structure arranged around the terminal board 216, with the first protruding part 214 surrounding the outer circumference of the side plate 2123.

Specifically, the side plate 2123 is arranged around the substrate 2121 and extends along the circumferential direction of the substrate 2121 to form a closed circular structure. The side plate 2123 and the substrate 2121 form together a cavity for accommodating the terminal board 216, which is located on the outer side along the rear end direction of the shell component 211 and is provided within the cavity.

The first protruding part 214 is arranged around the outer circumference of the side plate 2123 to form a closed annular structure, so as to enclose the substrate 2121 and the side plate 2123 of the insulating member 212 within the inner ring of the first protruding part 214.

Based on the implementation form that "the flow blocking component further includes a first sealing member 215, which is set on the inner peripheral surface of the first protruding part 214 and the outer peripheral surface of the insulating member 212", the first sealing member 215 can be set between the inner peripheral surface of the first protruding part 214 and the outer peripheral surface of the side plate 2123 to achieve seal between the first protruding part 214 and the side plate 2123.

The substrate 2121 and side plate 2123 of the insulating member 212 form a cavity to accommodate the terminal board 216, thereby effectively ensuring the adequacy of the insulation and isolation of the insulating member 212 for the terminal board 216 and the shell component 211. The first protruding part 214 is arranged around the periphery of the side plate 2123, which can effectively block electrolyte entering the gap between the substrate 2121 of the insulating member 212 and the outer surface 2112 of the shell component 211 from any position at the periphery of the insulating member 212, thereby reducing the risk of electrolyte entering the first through-hole 2111 and conducting the shell component 211 and electrode terminal 213, thereby effectively improving the safety performance of the battery cell 20.

According to some embodiments of the present disclosure, the terminal board 216 comprises a first surface 2161 facing away from the outer surface 2112, with a distance of D from the first surface 2161 to the outer surface 2112, and a height of H from the first protruding part 214 protruding from the outer surface 2112, satisfying H ≤ D.

Specifically, the end of the first protruding part 214 protruding from the outer surface 2112 can be flush with the first surface 2161 of the terminal board 216, or lower than the side of the terminal board 216 that is away from the shell component 211. For example, as shown in FIG. 9, the height H of the first protruding part 214 protruding from the outer surface 2112 is smaller than the distance D from the first surface 2161 of the terminal board 216 to the outer surface 2112.

If the height of the first protruding part 214 protruding from the outer surface 2112 exceeds the first surface 2161 of the terminal board 216, it is easy to cause positional interference in the connection between the terminal board 216 and the current flow component of the battery 100, and it will occupy too much external space of the battery cell 20 where the shell assembly 21 is located, which is not conducive to improving the space utilization rate of the battery 100. The height of the first protruding part 214 protruding from the outer surface 2112 is limited to the range not exceeding the first surface 2161 of the terminal board 216, which can effectively reduce the risk of position interference caused by the first protruding part 214 on the connection for battery 100, and is conducive to ensuring the energy density of the battery 100.

According to some embodiments of the present disclosure, as shown in FIG. 9, the height of the first protruding part 214 protruding from the outer surface 2112 of the shell component 211 is H, which satisfies that H is ≥ 0.5mm.

Specifically, the height H of the first protruding part 214 protruding from the outer surface 2112 of the shell component 211 along the thickness direction X of the shell component 211 can be any value greater than or equal to 0.5mm, for example, H can be 0.5mm, 0.52mm, 0.55mm, 0.6mm, 0.8mm, 1mm, 2mm, etc. The higher the height of the first protruding part 214 protruding from the outer surface 2112 of the shell component 211 is, the less likely the electrolyte is to overflow the first protruding part 214, and the more sufficient and reliable the blocking effect of the first protruding part 214 is on the electrolyte.

In some embodiments, H can be less than or equal to 2mm to fully utilize the blocking effect of the first protruding part 214 on the electrolyte while reducing material loss of the first protruding part 214, and avoiding excessive occupation of the external space of the battery cell 20 or positional interference with other components by the first protruding part 214. For example, H is 1mm.

The height of the first protruding part 214 protruding from the outer surface 2112 of the shell component 211 is greater than or equal to 0.5mm, which can effectively increase the difficulty for the electrolyte on the outer surface 2112 of the shell component 211 to overflow the first protruding part 214, thereby effectively ensuring the blocking effect of the first protruding part 214 on the electrolyte on the outer surface 2112 of the shell component 211.

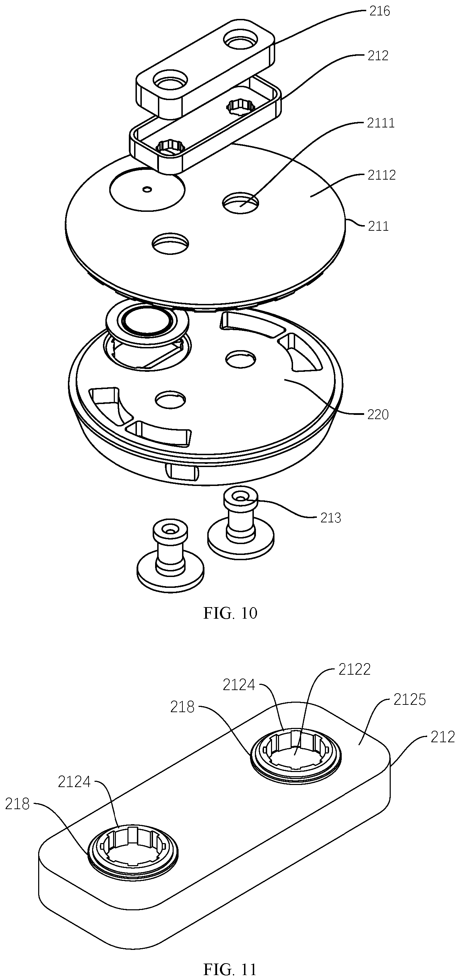

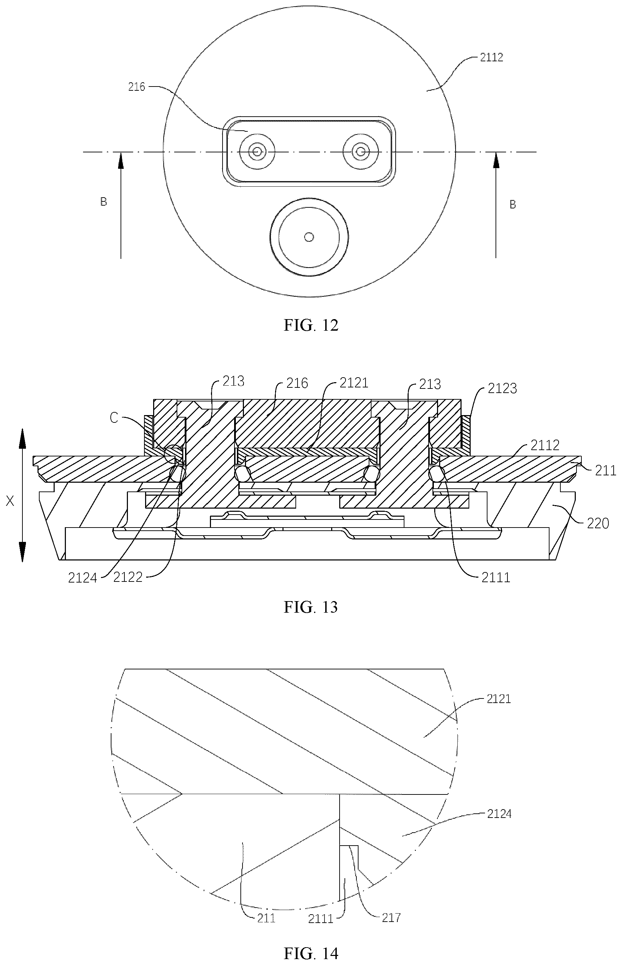

In accordance with some other embodiments of the present disclosure, referring to FIGS. 10 to 13, FIG. 10 is an exploded view of the shell assembly 21 provided in some other embodiments of the present disclosure; FIG. 11 is a structural schematic view of the insulating member 212 provided in some other embodiments of the present disclosure; FIG. 12 is a top view of the shell assembly 21 provided in some other embodiments of the present disclosure; and FIG. 13 is a sectional view in the B-B direction shown in FIG. 12; The insulating member 212 includes a substrate 2121 and a boss 2124. The substrate 2121 is located on the outer side of the shell component 211 in the thickness direction X. The substrate 2121 includes a second surface 2125 facing the shell component 211, and the boss 2124 protrudes from the second surface 2125 and is inserted into the first through-hole 2111. The second through-hole 2122 penetrates through the substrate 2121 and the boss 2124.

The substrate 2121 can be roughly in the shape of a plate. The substrate 2121 is located on one side of the shell component 211 away from the electrode assembly 23, and the boss 2124 protrudes from the side of the substrate 2121 facing the shell component 211 and is inserted into the first through-hole 2111 located on the shell component 211. The second through-hole 2122 passes through the substrate 2121 and the boss 2124 and is communicated with the first through-hole 2111. The electrode terminal 213 is inserted into the first through-hole 2111 and the second through-hole 2122, and the setting of the boss 2124 effectively isolates the outer peripheral surface of the electrode terminal 213 inserted into the first through-hole 2111 and the hole wall of the first through-hole 2111, so that the electrode terminal 213 and the shell component 211 are separated from each other.

A boss 2124 is set on the second surface 2125 of the insulating component 212 facing the shell component 211, which is inserted into the first through-hole 2111. The boss 2124 can effectively isolate the outer peripheral surface of the electrode terminal 213 and the hole wall of the first through-hole 2111, thereby effectively ensuring the insulation and isolation effect of the insulating member 212 on the shell component 211 and the electrode terminal 213.

According to some other embodiments of the present disclosure, referring to FIG. 13 continuously and referring further to FIG. 14, FIG. 14 is a partially enlarged view of the part C shown in FIG. 13. The flow blocking component comprises a second protruding part 217, wherein the second protruding part 217 protrudes from the outer peripheral surface of the boss 2124, and the second protruding part 217 abuts against the hole wall of the first through-hole 2111; or the second protruding part 217 protrudes from the hole wall of the first through-hole 2111, and the second protruding part 217 abuts against the outer peripheral surface of the boss 2124.

Specifically, the second protruding part 217 can be located on the outer peripheral surface of the boss 2124, and the outer peripheral surface of the second protruding part 217 abuts against the hole wall of the first through-hole 2111. The second protruding part 217 can be in line contact with the hole wall of the first through-hole 2111 or in surface contact with the hole wall of the first through-hole 2111. For example, the second protruding part 217 is in surface contact with the hole wall of the first through-hole 2111. The second protruding part 217 can be integrally formed with the boss 2124, or can be separated from the boss 2124 and installed on the boss 2124 through clamping, bonding, welding, and other methods.

The second protruding part 217 can extend along the circumferential direction of the first through-hole 2111 and form a circular flange on the outer peripheral surface of the boss 2124.

The second protruding part 217 can be integrally formed with the insulating member 212. It prevents the possibility of displacement or omission of the second protruding part 217, and effectively ensures the effectiveness of the second protruding part 217 in sealing the gap between the first through-hole 2111 and the boss 2124. The second protruding part 217 can protrude from the side near the substrate 2121 of the boss 2124, or from the side away from the substrate 2121 of the boss 2124. For example, as shown in FIG. 14, the second protruding part 217 protrudes from the side of the boss 2124 near the substrate 2121, and abuts against the hole wall at one end of the first through-hole 2111 facing the outer surface 2112 of the shell component 211, thereby blocking electrolyte from entering the gap between the boss 2124 and the first through-hole 2111, and preventing the electrolyte from further penetrating through the gap between the boss 2124 and the first through-hole 2111 and entering the gap between the hole wall of the first through-hole 2111 and the electrode terminal 213.

Of course, the second protruding part 217 can also be set on the hole wall of the first through-hole 2111, and the inner peripheral surface of the second protruding part 217 abuts against the outer peripheral surface of the boss 2124. The second protruding part 217 can be in line contact with the outer peripheral surface of the boss 2124 or in surface contact with the outer peripheral surface of the boss 2124. For example, the second protruding part 217 is in surface contact with the outer peripheral surface of the boss 2124. The second protruding part 217 can be integrally formed with the shell component 211, or can be separated from the shell component 211 and fixed to the shell component 211 through clamping, bonding, welding, and other methods.

The second protruding part 217 can extend along the circumferential direction of the first through-hole 2111 and form a circular flange on the hole wall of the first through-hole 2111.

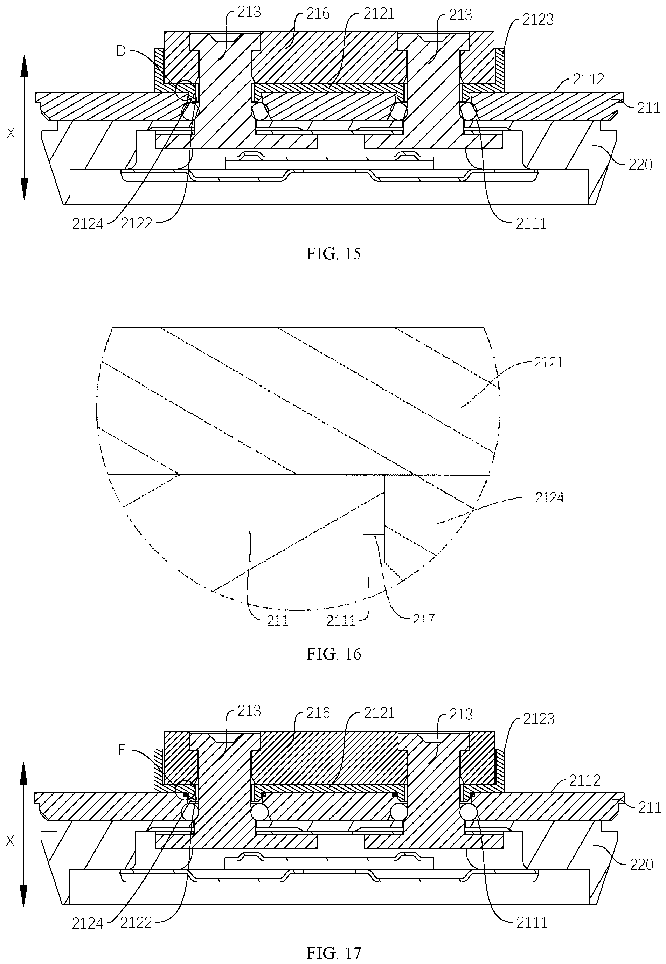

Referring to FIGS. 15 and 16, FIG. 15 is a sectional view in some other embodiments in the B-B direction shown in FIG. 12; and FIG. 16 is a partially enlarged view of the part D shown in FIG. 15; The second protruding part 217 can protrude from the hole wall of the first through-hole 2111 and be integrally formed with the shell component 211.

The second protruding part 217 can protrude from one end of the first through-hole 2111 facing the outer surface 2112 of the shell component 211, or from the middle position of the axial direction of the first through-hole 2111. For example, as shown in FIG. 16, the second protruding part 217 protrudes from one end of the first through-hole 2111 facing the outer surface 2112 of the shell component 211, and abuts against the outer peripheral surface of one end of the boss 2124 near the substrate 2121, thereby blocking electrolyte from entering the gap between the boss 2124 and the first through-hole 2111, and preventing the electrolyte from further penetrating through the gap between the boss 2124 and the first through-hole 2111 and entering the gap between the hole wall of the first through-hole 2111 and the electrode terminal 213.

The flow blocking component includes a second protruding part 217, which protrudes from the outer peripheral surface of the boss 2124 and abuts against the hole wall of the first through-hole 2111, or protrudes from the hole wall of the first through-hole 2111 and abuts against the outer peripheral surface of the boss 2124. The second protruding part 217 can further block the electrolyte from entering, from the gap between the boss 2124 and the first through-hole 2111, the gap between the shell component 211 and the electrode terminal 213, thereby avoiding electronic conduction between electrode terminal 213 and shell component 211 due to the presence of electrolyte and avoiding the migration of metal ions due to electronic conduction in shell component 211, so as to improve the safety performance of the battery cell 20.

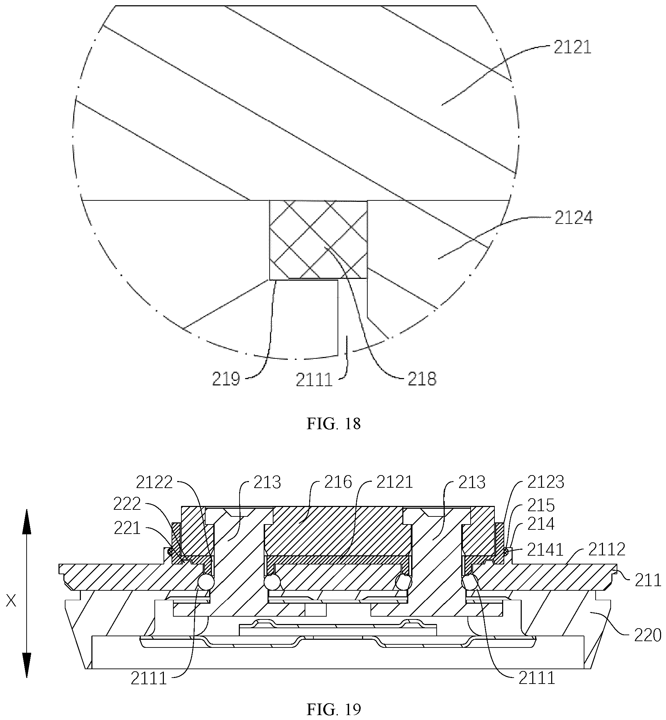

According to some other embodiments of the present disclosure, referring to FIGS. 11 and 12 again and referring together to FIGS. 17 and 18, FIG. 17 is a sectional view in some other embodiments in the B-B direction shown in FIG. 12; and FIG. 18 is a partially enlarged view of the part E shown in FIG. 17; The flow blocking component comprises a second sealing member 218, provided between the outer peripheral surface of the boss 2124 and the hole wall of the first through-hole 2111.

Specifically, the second sealing member 218 can extend along the circumferential direction of the first through-hole 2111 to form a closed annular structure. For example, the second sealing member 218 can be a sealing ring, and the second sealing member 218 is set between the outer peripheral surface of the boss 2124 and the hole wall of the first through-hole 2111, so as to seal the hole wall of the first through-hole 2111 and the boss 2124.

It can be understood that the first protruding part 214, the second protruding part 217, and the second sealing member 218 can coexist in the same shell assembly 21, or any one of them can exist alone in the shell assembly 21, or any two can exist in the same shell assembly 21. Moreover, based on the implementation form that "the flow blocking component includes a second protruding part 217 and a second sealing member 218", the second sealing member 218 can be set on the side facing the substrate 2121 of the second sealing member 218, or on the side away from the substrate 2121 of the second protruding part 217.

The second sealing member 218 can effectively prevent the electrolyte from entering the gap between the hole wall of the first through-hole 2111 of the shell component 211 and the electrode terminal 213 through the gap between the boss 2124 and the first through-hole 2111. It avoids electronic conduction between electrode terminal 213 and shell component 211 due to the presence of electrolyte, thereby preventing the migration of metal ions in shell component 211 due to electronic conduction, so as to improve the safety performance of battery cells 20.

According to some embodiments of the present disclosure, referring to FIG. 18, the hole wall of the first through-hole 2111 is provided with a second groove 219, and at least a portion of the second sealing member 218 is located in the second groove 219.

Specifically, the second groove 219 can extend along the circumferential direction of the first through-hole 2111, thereby forming an annular groove on the hole wall of the first through-hole 2111. The second sealing member 218 is located between the boss 2124 and the hole wall of the first through-hole 2111, and a portion of the second sealing member 218 is embedded in the second groove 219.

The second groove 219 plays an accommodating and limiting role in the second sealing member 218, and can effectively improve the sealing effect of the second sealing member 218, thereby effectively ensuring the sealing performance between the boss 2124 and the first through-hole 2111.

According to some embodiments of the present disclosure, as shown in FIG. 18, the second groove 219 extends to the outer surface 2112 of the shell component 211.

Specifically, the second groove 219 is located at the junction between the outer surface 2112 of the shell component 211 and the hole wall of the first through-hole 2111, and forms a sinking area at one end of the first through-hole 2111 facing the outer surface 2112 of the shell component 211. This structure is conducive to the assembly of the shell assembly 21. During the assembly process of the shell assembly 21, it is easy for the second sealing member 218 to be embedded into the second groove 219 for positioning, which is conducive to ensuring the sealing effect of the second sealing member 218.

According to some embodiments of the present disclosure, referring to FIG. 5 again, the shell assembly 21 may further include an insulating component 220, which is located on the side of the shell component 211 away from the insulating member 212. The insulating component 220 can adopt a thin sheet structure. The insulating component 220 can be made of insulation and electrolyte resistant materials such as polypropylene, polycarbonate, polytetrafluoroethylene, polyvinyl chloride, polyester resin, etc.

Referring to FIG. 19, FIG. 19 is a sectional view of the A-A direction shown in FIG. 8 in some other embodiments. According to some other embodiments of the present disclosure, the insulating member 212 comprises a substrate 2121, which is provided on the outer side of the shell component 211 along its own thickness direction X. The substrate 2121 comprises a second surface 2125 facing the shell component 211, which is provided with a third groove 222. The flow blocking component further comprises a third protruding part 221, which protrudes from the outer surface 2112 and is inserted into the third groove 222.

Specifically, one or multiple third protruding parts 221 can be provided, and correspondingly, the number and position of the third groove 222 correspond to the third protruding part 221. All or part of the third protruding part 221 is inserted into the third groove 222, so that the third protruding part 221 and the third groove 222 are pressed against each other to form a sealing component. Thus, the liquid located on one side of the sealing component cannot flow through the sealing component to the other side of the sealing component.

It can be understood that the third protruding part 221 can extend along the circumferential direction of the first through-hole 2111. Of course, the third protruding part 221 can also extend along the circumferential direction of the first through-hole 2111 to form a closed ring.

A third groove 222 is set on the second surface 2125 of the insulating member 212 facing the upper surface, and a third protruding part 221 is set on the upper surface of the shell component 211 and inserted into the third groove 222, thereby forming a sealed connection between the shell component 211 and the insulating member 212, thereby preventing electrolyte from entering the gap between the shell component 211 and the electrode terminal 213 along the gap between the shell component 211 and the insulating member 212, reducing the possibility of electronic conduction between electrode terminal 213 and shell component 211, and improving the safety and quality of the battery cell 20 where the shell assembly 21 is located.

According to some embodiments of the present disclosure, the third protruding part 221 forms a circular protrusion arranged around the electrode terminal 213.

It can be understood that the third protruding part 221 forms a circular protrusion arranged around the electrode terminal 213, and the third groove 222 can correspondingly form a circular groove arranged around the electrode terminal 213.

The third protruding part 221 and the third groove 222 can be constructed as circular rings, rectangular rings, or other shaped rings. The positions and sizes of the third protruding part 221 and the third groove 222 correspond to each other, so that the third protruding part 221 can be smoothly clamped into the third groove 222.

In some embodiments, multiple third protruding parts 221 may be provided, each of which forms a circular protrusion arranged around the electrode terminal 213. Correspondingly, multiple third grooves 222 can also be provided and correspond one-to-one with the third protruding parts 221.

The third protruding part 221 forms a circular protrusion arranged around the electrode terminal 213 to enclose the electrode terminal 213 in a closed space formed by the third protruding part 221, thereby effectively blocking the electrolyte from approaching the electrode terminal 213 from any direction, and further reducing the possibility of electronic conduction between the electrode terminal 213 and the shell component 211.

According to some embodiments of the present disclosure, a first liquid injection hole is provided on the shell component 211.

A first liquid injection hole is provided on the shell component 211, which can be used to inject electrolyte into the battery cell 20 where the shell assembly 21 is located.

Some embodiments of the present disclosure provide a battery cell 20, which includes a shell assembly 21 of any of the above solutions.

Referring to FIGS. 3 and 4 again, some embodiments of the present disclosure provide a battery cell 20, including a casing 22 and a first end cover 211a. The casing 22 has a first opening 2201, and the first end cover 211a is used to cover the first opening 2201. The shell component 211 is the first end cover 211a or the casing 22.

Specifically, the shell component 211 can be a first end cover 211a or a casing 22 with a first opening 2201. For example, the shell component 211 is the first end cover 211a, which means that the shell assembly 21 forms the end cover component of the battery cell 20.

According to some embodiments of the present disclosure, referring to FIGS. 3 and 4 again, the casing 22 also has a second opening 2202 opposite to the first opening 2201. The battery cell 20 further includes a second end cover 211b, which is used to cover the second opening 2202. The first end cover 211a is the shell component 211, and the second end cover 211b is equipped with a second liquid injection hole 24.

It can be understood that one of the first end cover 211a and the second end cover 211b is a positive end cover, and the other is a negative end cover. For example, the first end cover 211a is the negative end cover, and the second end cover 211b is the positive end cover. The first end cover 211a can be the negative end cover, and the second end cover 211b is the positive end cover and is equipped with a second liquid injection hole 24.

When the battery cell 20 experiences spraying during electrolyte injection, the electrolyte is sprayed out through the second liquid injection hole 24 on the second end cover 211b (positive end cover assembly) and flows along the casing 22 to the first end cover 211a (negative end cover assembly). The shell assembly 21 where the first end cover 211a is located is equipped with a flow blocking component, which can effectively prevent electrolyte from entering the gap between the first end cover 211a and the electrode terminal 213. The shell assembly 21 where the negative end cover is located is equipped with a flow blocking component, which can effectively prevent the casing 22 of the battery cell 20 from carrying negative electricity, thereby preventing corrosion and leakage of liquid of the casing 22 and the end cover due to carrying negative electricity.

Of course, in some other embodiments, both the first end cover 211a and the second end cover 211b may be shell components 211 of any of the above solutions.

Some embodiments of the present disclosure also provide a battery 100, including a battery cell 20 as described in any of the above solutions.

Some embodiments of the present disclosure provide an electrical equipment comprising a battery cell 20 as described in any of the above solutions, wherein the battery cell 20 is configured to provide electrical energy; or comprising the battery 100 described in the above solution, wherein the battery 100 is configured to provide electrical energy.

Referring to FIGS. 5 to 9, some embodiments of the present disclosure provide a shell assembly 21, which includes a shell component 211, an insulating member 212, an electrode terminal 213, a terminal board 216, and a flow blocking component. The shell component 211 includes a first through-hole 2111, which runs through the shell component 211 along the thickness direction X of the shell component 211. The insulating member 212 includes a substrate 2121, a side plate 2123, and a boss 2124. The substrate 2121 is located on the outer side of the shell component 211 along the thickness direction X. The substrate 2121 includes a second surface 2125 facing the shell component 211, and the boss 2124 protrudes from the second surface 2125. A second through-hole 2122 is provided on the substrate 2121, and the second through-hole 2122 penetrates through the substrate 2121 and the boss 2124 and is communicated with the first through-hole 2111. The electrode terminal 213 is installed on the first through-hole 2111 and the second through-hole 2122. The terminal board 216 is located on the outer side of the shell component 211 along the thickness direction X and is connected to the electrode terminal 213. Along the thickness direction X, the substrate 2121 is located between the terminal board 216 and the shell component 211, the side plate 2123 is arranged around the substrate 2121, the substrate 2121 and the side plate 2123 form a cavity to accommodate the terminal board 216, and the terminal board 216 is located within this cavity.

The flow blocking component includes a first protruding part 214 and a first sealing member 215. The first protruding part 214 protrudes from the outer surface 2112 of the shell component 211, and the first protruding part 214 is arranged around the outer circumference of the side plate 2123 and forms a closed annular structure. The first sealing member 215 is provided between the inner peripheral surface of the first protruding part 214 and the outer peripheral surface of the side plate 2123.

Referring to FIGS. 10 to 18, some embodiments of the present disclosure provide a shell assembly 21, which includes a shell component 211, an insulating member 212, an electrode terminal 213, a terminal board 216, and a flow blocking component. The shell component 211 includes a first through-hole 2111, which runs through the shell component 211 along the thickness direction X of the shell component 211. The insulating member 212 includes a substrate 2121, a side plate 2123, and a boss 2124. The substrate 2121 is located on the outer side of the shell component 211 along the thickness direction X. The substrate 2121 includes a second surface 2125 facing the shell component 211, and the boss 2124 protrudes from the second surface 2125. A second through-hole 2122 is provided on the substrate 2121, and the second through-hole 2122 penetrates through the substrate 2121 and the boss 2124 and is communicated with the first through-hole 2111. The electrode terminal 213 is installed on the first through-hole 2111 and the second through-hole 2122. The terminal board 216 is located on the outer side of the shell component 211 along the thickness direction X and is connected to the electrode terminal 213. Along the thickness direction X, the substrate 2121 is located between the terminal board 216 and the shell component 211, the side plate 2123 is arranged around the substrate 2121, the substrate 2121 and the side plate 2123 form a cavity to accommodate the terminal board 216, and the terminal board 216 is located within this cavity.

The flow blocking component includes a second protruding part 217 and a second sealing member 218. The second protruding part 217 protrudes from the outer peripheral surface of the boss 2124 and extends along the circumferential direction of the first through-hole 2111. The second protruding part 217 abuts against the hole wall of the first through-hole 2111. The second sealing member 218 is provided between the outer peripheral surface of the boss 2124 and the hole wall of the first through-hole 2111.

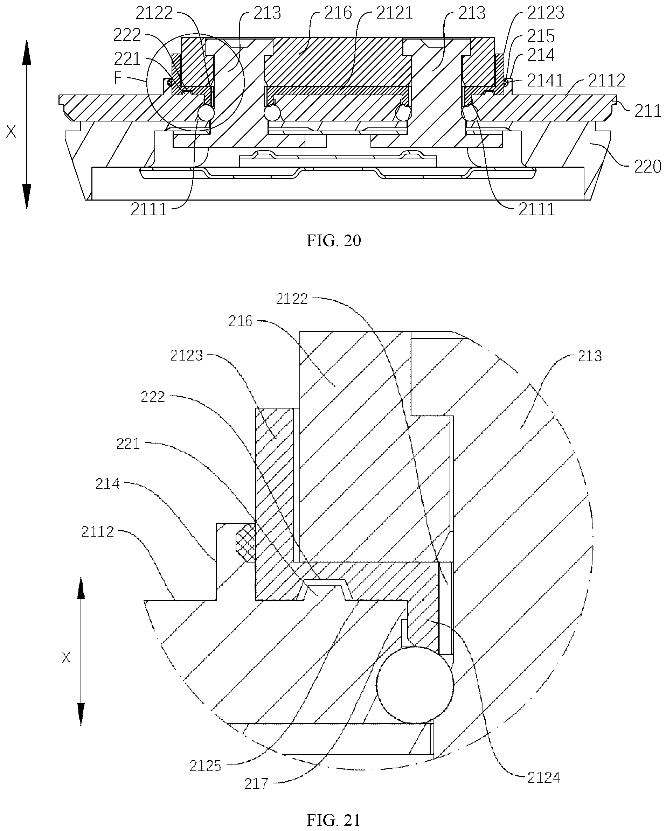

Referring to FIGS. 5 to 21, some embodiments of the present disclosure provide a shell assembly 21, which includes a shell component 211, an insulating member 212, an electrode terminal 213, a terminal board 216, and a flow blocking component. The shell component 211 includes a first through-hole 2111, which runs through the shell component 211 along the thickness direction X of the shell component 211. The insulating member 212 includes a substrate 2121, a side plate 2123, and a boss 2124. The substrate 2121 is located on the outer side of the shell component 211 along the thickness direction X. The substrate 2121 includes a second surface 2125 facing the shell component 211, and the boss 2124 protrudes from the second surface 2125. A second through-hole 2122 is provided on the substrate 2121, and the second through-hole 2122 penetrates through the substrate 2121 and the boss 2124 and is communicated with the first through-hole 2111. The electrode terminal 213 is installed on the first through-hole 2111 and the second through-hole 2122. The terminal board 216 is located on the outer side of the shell component 211 along the thickness direction X and is connected to the electrode terminal 213. Along the thickness direction X, the substrate 2121 is located between the terminal board 216 and the shell component 211, the side plate 2123 is arranged around the substrate 2121, the substrate 2121 and the side plate 2123 form a cavity to accommodate the terminal board 216, and the terminal board 216 is located within this cavity.

The flow blocking component includes a first protruding part 214 and a first sealing member 215. The first protruding part 214 protrudes from the outer surface 2112 of the shell component 211, and the first protruding part 214 is arranged around the outer circumference of the side plate 2123 and forms a closed annular structure. The first sealing member 215 is provided between the inner peripheral surface of the first protruding part 214 and the outer peripheral surface of the side plate 2123.

The flow blocking component further includes a second protruding part 217 and a third protruding part 221. The second protruding part 217 protrudes from the outer peripheral surface of the boss 2124 and extends along the circumferential direction of the first through-hole 2111. The second protruding part 217 abuts against the hole wall of the first through-hole 2111.

The second surface 2125 is provided with a third groove 222, and the third protruding part 221 protrudes from the outer surface 2112 and is inserted into the third groove 222.

It can be understood that the same shell assembly 21 can be equipped with only one of the first protruding part 214, the second protruding part 217, the third protruding part 221, and the second sealing member 218. It can also be equipped with any two, three, or all of the first protruding part 214, the second protruding part 217, the third protruding part 221, and the second sealing member 218.

It should be noted that in the absence of conflicts, the features in the embodiments in the present disclosure can be combined with each other.

Although the present disclosure has been described with reference to preferred embodiments, various improvements can be made thereto and components therein can be replaced with equivalents without departing from the scope of the present disclosure. Especially, as long as there is no structural conflict, the various technical features mentioned in various embodiments can be combined in any way. The present disclosure is not limited to the specific embodiments disclosed in the text, but includes all technical solutions falling within the scope of the claims.

## Claims

1. A shell assembly, comprising:
a shell component, comprising an inner surface and an outer surface arranged oppositely, and a first through-hole penetrating the inner surface and the outer surface;
an insulating member, at least partially located on the outer surface of the shell component, wherein the insulating member comprises a second through-hole communicating with the first through-hole;
an electrode terminal, installed in the first through-hole and the second through-hole to insulate and isolate from the shell component through the insulating member; and
a flow blocking component, wherein the flow blocking component is configured to block a liquid from entering a gap between the shell component and the electrode terminal through a gap between the insulating member and the shell component.

2. The shell assembly according to claim 1, wherein the flow blocking component comprises a first protruding part protruding from the outer surface, and the first protruding part is arranged on an outer periphery of the insulating member.

3. The shell assembly according to claim 2, wherein the first protruding part forms a closed annular structure.

4. The shell assembly according to claim 2 or 3, wherein the flow blocking component further comprises:
a first sealing member, wherein the first sealing member is sandwiched between the first protruding part and the insulating member.

5. The shell assembly according to claim 4, wherein at least one of the first protruding part and the insulating member is provided with a first groove, and at least a portion of the first sealing member is located in the first groove.

6. The shell assembly according to claim 5, wherein the first protruding part forms a closed annular structure, the first groove is an annular groove arranged on an inner peripheral surface of the first protruding part, the first sealing member is sleeved on an outer peripheral surface of the insulating member, and at least a portion of the first sealing member is located inside the first groove.

7. The shell assembly according to any one of claims 2 to 6, wherein the first protruding part and the shell component are integrally molded.

8. The shell assembly according to any one of claims 2 to 7, wherein the shell assembly further comprises:
a terminal board, provided on an outer side of the shell component along its thickness direction, wherein the terminal board is connected to the electrode terminal, at least a portion of the insulating member is provided between the terminal board and the shell component, and the terminal board is insulated and isolated from the shell component through the insulating member.

9. The shell assembly according to claim 8, wherein the insulating member comprises:
a substrate, located between the terminal board and the shell component along the thickness direction of the shell component, wherein the second through-hole is provided on the substrate; and
a side plate, connected to the substrate and at least partially arranged on one side of the terminal board along a second direction, wherein the second direction is perpendicular to the thickness direction of the shell component.

10. The shell assembly according to claim 9, wherein the side plate is in a circular structure arranged around the terminal board, with the first protruding part surrounding an outer circumference of the side plate.

11. The shell assembly according to any one of claims 8 to 10, wherein the terminal board comprises a first surface facing away from the outer surface, wherein a distance, D, between the first surface and the outer surface and a height, H, of the first protruding part extending from the outer surface satisfy: H ≤ D.

12. The shell assembly according to any one of claims 2 to 11, wherein a height of the first protruding part extending from the outer surface, H, satisfies: H ≥ 0.5mm.

13. The shell assembly according to any one of claims 1 to 12, wherein the insulating member comprises:
a substrate, provided on an outer side of the shell component along its thickness direction, wherein the substrate comprises a second surface facing the shell component; and
a boss, provided on the substrate, wherein the boss protrudes from the second surface and is inserted into the first through-hole, and the second through-hole extends through the substrate and the boss.

14. The shell assembly according to claim 13, wherein:
the flow blocking component further comprises a second protruding part, wherein the second protruding part protrudes from an outer peripheral surface of the boss, and the second protruding part abuts against a hole wall of the first through-hole; or
the flow blocking component further comprises a second protruding part, wherein the second protruding part protrudes from the hole wall of the first through-hole, and the second protruding part abuts against the outer peripheral surface of the boss.

15. The shell assembly according to claim 13 or 14, wherein the flow blocking component comprises a second sealing member, provided between an outer peripheral surface of the boss and a hole wall of the first through-hole.

16. The shell assembly according to claim 15, wherein the hole wall of the first through-hole is provided with a second groove, and at least a portion of the second sealing member is located in the second groove.

17. The shell assembly according to claim 16, wherein the second groove extends to the outer surface of the shell component.

18. The shell assembly according to any one of claims 1 to 17, wherein the insulating member comprises a substrate, arranged on an outer side of the shell component along its thickness direction, wherein the substrate comprises a second surface facing the shell component, and the second surface is provided with a third groove; and the flow blocking component further comprises:
a third protruding part, protruding from the outer surface and inserted into the third groove.

19. The shell assembly according to claim 18, wherein the third protruding part forms an annular protrusion arranged around the electrode terminal.

20. The shell assembly according to any one of claims 1 to 19, wherein a first liquid injection hole is provided on the shell component.

21. A battery cell, comprising the shell assembly according to any one of claims 1 to 20.

22. The battery cell according to claim 21, wherein the battery cell comprises:
a casing, having a first opening; and
a first end cover, configured to cover the first opening,
wherein the shell component is the first end cover or the casing.

23. The battery cell according to claim 22, wherein the casing further has a second opening opposite to the first opening, and the battery cell further comprises:
a second end cover, configured to cover the second opening,
wherein the first end cover is the shell component, and the second end cover is provided with a second liquid injection hole.

24. A battery, comprising the battery cell according to any one of claims 21 to 23.

25. Electrical equipment, comprising:
the battery cell according to any one of claims 21 to 23, wherein the battery cell is configured to provide electrical energy; or
the battery according to claim 24, wherein the battery is configured to provide electrical energy.
